# EUROPEAN PATENT APPLICATION

(11) **EP 3 467 021 A1**
(43) Date of publication of application: **10.04.2019**
(21) Application number: 18196603.7
(22) Date of filing: 25.09.2018
(51) Int. Cl.: C08L 19/00, B29B 17/00, C08J 3/12

(54) **POLYMER MATERIAL AND PROCESS OF OBTAINING IT**

(30) Priority: 25.09.2017 PT 2017110302
(71) Applicant: Biosafe - Indústria De Reciclagens, S.A., 3881-902 Ovar (PT)
(72) Inventor: MARTINS DE CARVALHO, JOSÉ MANUEL, 3740-251 SEVER DO VOUGA (PT); DOS SANTOS OLIVEIRA, MARIA DA GRAÇA, 3720-350 VILA DE CUCUJÃES (PT); DA SILVA FERNANDES, RUI, 4520-606 SÃO JOÃO DE VER (PT); SIMÕES RAMOS, TIAGO MANUEL, 4425-057 MAIA (PT)
(74) Representative: Ferreira, Maria Silvina

(57) **Abstract**

The present application describes a polymer material and the process of obtaining it. The polymer material is obtained through a process comprising steps of preparing the polymer granulate having a particle size under 0.8 mm, an agglomeration step without the use of bonding agents and another complementary one using vulcanization additives. The main advantage of the technology is the obtainment of end parts that present relevant mechanical behavior for certain types of applications, namely non-technical parts wherein the price/quality ratio assumes a vital importance when it is placed on the market.

## Description

### Technical Field

The present application describes a polymer material and the process of obtaining it.

### Background

The use of rubber granulate from used tires having a particle size under 0.8 mm for obtaining new parts that enable the reuse of that material is known within the state of the art.

A bonding agent is habitually used to obtain parts that might include this polymer material and so that some agglomeration may occur.

Over the years, many forms of using rubber granulate from end of live tires (ELT), having a particle size under 0.8mm, have been studied and defended. We shall, hereafter, refer to them as rubber fines (RF), using a polyurethane resin, for example, as bonding agent for the compression molding process, one or more polymers of the polyolefin type for the extrusion molding process or else vulcanization additives for the compression molding process with vulcanization.

However, the state of the art does not comprise the possibility of having agglomeration of the granulate without the addition of any bonding agent.

### Summary

The present application describes a polymer material that comprises an agglomerate of vulcanized polymers having a particle size under 0.8 mm.

The application also describes the process of obtaining the polymer material. Initially, it is necessary to obtain vulcanized polymer granulates having a particle size greater than 0.8 mm which is transformed into granulate having a particle size under 0.8 mm (RFA). The step of size reduction occurs in a fine granulator.

The granulate having a particle size under 0.8 mm is subsequently agglomerated by compression molding under well-defined temperature and pressure conditions and in the absence of vulcanization additives. Since the material has free radicals, during the agglomeration step they physically bond together, obtaining good results for the end polymer material.

The process was also analyzed with the addition of vulcanization additives in the agglomeration step of the granulate having a particle size under 0.8 mm. With the addition of vulcanization additives, chemical bonds are provided, in addition to the physical bonds between the granulate. The vulcanization additives constitute an important family of mixture ingredients, which are responsible for the vulcanization reaction and which become incorporated into the end material, forming covalent bonds, hydrogen bonds or other types of bonds between the molecules, conferring elastic properties to the vulcanized materials. The present application describes a polymer material that comprises agglomerates of powders of vulcanized polymers having a particle size under 0.8 mm.

In an embodiment, the polymer material comprises an agglomerate of powders of vulcanized polymers having a particle size under 0.8 mm, wherein the powders of vulcanized polymers present a specific area comprised from 0.22 to 0.27 m²/g.

In an embodiment, the process of obtaining the polymer material described in the preceding claim comprises the following steps:
- collection of polymer granulates having a particle size greater than 0.8 mm;
- transformation of the polymer granulate into granulate having a particle size under 0.8 mm by way of friction between disks mounted on two shafts turning in opposite directions and at different speeds, and the subsequent cooling of the granulate to a temperature of 40°C;
- agglomeration of the polymer granulate having a particle size under 0.8 mm by way of compression molding occurring between 160 and 200°C and pressure between 6 and 10 tons/dm².

In an embodiment, the working temperature in preparing the polymer granulate having a particle size under 0.8 mm is comprised between 60 and 90°C.

In another embodiment, the working temperature in preparing the polymer granulate having a particle size under 0.8 mm is comprised between 70 and 85°C.

In another embodiment, the surface of the two contiguous disks comprises a spacing between 0.2 and 0.6 mm.

In yet another embodiment, the relative rotation speed of the two contiguous disks is fixed at a ratio of 17.5:1.

In an embodiment, the agglomeration step comprises vulcanization additives.

In another embodiment, the vulcanization additives are vulcanization agents added in a percentage between 0.01 and 1.10%.

In still another embodiment, the vulcanization agents are selected from a list comprising zinc oxide and sulphur.

In an embodiment, the vulcanization additives are vulcanization activators added in a percentage between 0.01 and 1%.

In another embodiment, the vulcanization activator is stearic acid.

In an embodiment, the vulcanization additives are vulcanization accelerators added in a percentage between 0.01 and 1%.

In another embodiment, the vulcanization accelerators are selected from the following list: zinc diethyldithiocarbamate from the carbamate family, and/or tetramethylthiuram disulfide from the thiuram family, and/or n-cyclohexyl benzothiazole sulfenamide from the sulfenamide family.

In yet another embodiment, the vulcanization additives are used separately or jointly.

### General description

The present application describes a polymer material and the process of obtaining it.

Considering that the use of bonding agents is a limitation on obtaining parts having an improved quality/price ratio, the line of development underpinning the technology now disclosed is the obtainment of a polymer material from the agglomeration of powders of vulcanized polymers, such as for example rubber, within the range of particle sizes under 0.8 mm, preferably in the particle sizes comprised between 0.2 and 0.4 mm, 0.4 to 0.6 mm and 0.6 to 0.8 mm, obtained by a granulation process, for example from used tires and without any bonding agent, this material being referred to as activated rubber fines (RFA).

In some embodiments, in order to improve certain properties, namely tensile strength and elongation, vulcanization additives were added when parts were processed using the compression molding process with vulcanization, but always in quantities much smaller than those used in vulcanization process. The general bibliography available in this technical field shows the following formulation:
Natural rubber: 100 parts;
- Sulphur: 8 parts;
- Zinc oxide: 5 parts;
- Stearic acid: 1 part;
- Revulcanization accelerator: 1 part.

On the contrary, the formulations used for obtaining the polymer material now disclosed are specified in Table I.

**Table I - Polymer material formulations.**

| | Constituents | **1** | **2** | **3** | **4** | **5** | **6** | **7** |
|---|---|---|---|---|---|---|---|---|
| RFA | Sample | 90.90% | 86.95% | 95.23% | 95.23% | 95.46% | 100.00% | 99.81% |
| Vulcanization agent | Sulphur | 2.73% | 6.96% | 1.43% | 1.43% | 1.43% | 0.00% | 0.03% |
| Vulcanization activator | Zinc oxide | 4.55% | 4.35% | 2.38% | 2.38% | 2.39% | 0.00% | 0.05% |
| Vulcanization accelerator | Stearic acid | 0.91% | 0.87% | 0.48% | 0.48% | 0.48% | 0.00% | 0.10% |
| | Zinc diethyldithi ocarbonate | 0.91% | 0.87% | 0.48% | | 0.24% | 0.00% | 0.01% |
| | Tetramethylthiuran disulfide | | | | 0.48% | | | |
| | N-cyclohexyl benzothiazole sulfenamide | | | | | | | |

The main advantage of the technology is to obtain end parts that present relevant mechanical behavior for certain types of applications, namely non-technical parts wherein the price/quality ratio assumes a vital importance when it is placed on the market.

The process begins by obtaining a vulcanized, granulated polymer having sizes greater than 0.8 mm. In an embodiment, the vulcanized granulated polymer is obtained in a granulation line of used tires having environmental technology.

The granulated rubber which guarantees the agglomeration without the use of vulcanization additives is obtained from this granulate, subjecting it to a size reduction process. In an embodiment, the size reduction process occurs by way of friction between disks mounted on two shafts turning in opposite directions and at different speeds in equipment hereafter referred to as fine granulator.

Obtaining the granulate, with characteristics for agglomeration without vulcanization additives, in the fine granulator, is a closely monitored process bearing in mind the following parameters:
- The room temperature;
- The ratio of speeds between the two shafts;
- The spacing between the surface of each two contiguous disks;
- The particle size of the mixture of new granulates and of granulates originating from oversieve, which are accordingly greater than 0.8 mm, that enter into the fine granulator chamber and which shall be referred to as feed;
- The amount of granulate remaining in the fine granulator chamber;
- The working temperature inside the fine granulator;
- The output temperature of the oversieve and that of re-entry thereof into the fine granulator;
- The output temperature of the subsieve, that is, the temperature of the to-spec material, under 0.8 mm.

Throughout the present patent application, room temperature shall be considered as that which is common for a person skilled in the art, where such person is accustomed to working comfortably, and may vary approximately between -10 and 40°C, preferably between 20 and 25°C, more preferably between 21 and 23°C, yet without restricting to temperatures over or under these limits and provided that they are acceptable and recognized as room temperature applicable as habitually inside or outside factory buildings.

The color of the rubber granulate product is black and accordingly its temperature dissipates slowly.

If nothing is done, the temperature will rise during the process and the rubber granulate will be degraded if it remains over 90°C for some time.

This is why the working temperature of the fine granulator in the cutting zone must be between 60 and 90°C, preferably with working temperatures between 70 and 85°C.

The following contributes to the working temperature in the fine granulator: the room temperature, the ratio of speeds between the two shafts, the spacing between the surface of each of the two contiguous disks, the particle size of the feed mixture and the quantity of granulate remaining in the fine granulator chamber, the output temperature of the oversieve and that of the re-entry thereof into the fine granulator.

The spacing between the surface of each two contiguous disks determines the end particle size of the granulate. Depending on the granule size profile desired, this distance between the two contiguous disks can be regulated between 0.2 and 0.6 mm.

It jointly influences the working temperature along with the particle size of the feed from the fine granulator chamber in that the greater the particle size reduction to be carried out, the greater the amount of heat released. The room temperature also has influence here, as does the temperature of the mixture of granulates which is steadily fed into the granulator.

To guarantee the lowest possible temperature of the mixture of granulates, the granulates originating from the oversieve are cooled. A maximum temperature of 40°C is sought before returning the oversieve to the circuit.

As the quantity and the particle size of the granulate present in the fine granulator chamber also influences the temperature sway in the initial phase, the relative rotation speed of the two shafts was regulated, being fixed at a ratio of 17.5:1 favorable to the shaft of the disks that pull the granulate to be cut. By fixing this parameter, the feed from this chamber was thereafter controlled based on the electricity consumption of the engines powering the disks. Typically, amperage is limited to 30 A.

In order to assure that the temperature is maintained between the correct values, the fine granulator is equipped with a cooling system that starts up whenever the respective parameters are attained. Typically, the system starts up when a temperature of 70°C is attained.

The to-spec granulate rubber, that is, having a particle size under 0.8 mm, is stored in bigbags after its manufacturing. Upon filling the bigbag, the overlay of various layers of granulate means that if the granulate is not cooled and the room temperature is high, there is a tendency towards compacting making it harder to remove from the bigbag for subsequent use and if the temperature is very high the packaged product may be degraded. Generally it is necessary to ensure that the material when stored is not and will not be subject to temperatures above 40 ° C.

### Brief description of the drawings

For easier understanding of the art, the accompanying drawings represent preferred embodiments, but are not intended to limit the object of the present application.
Figure 1 describes an image obtained by scanning electron microscopy of a rubber granulate sample amplified 100 times.
Figure 2 describes a window of operations recommended for the process of agglomeration of the RFA granule, in cases that agglomerate (■), and cases that do not agglomerate (◆).

### Description of embodiments

Next, some embodiments will be described in greater detail, though they are not meant to limit the scope of the present application.

The present application describes a polymer material and the process of obtaining it.

The following characteristics can be observed in the granulate produced by this process, to which no vulcanization additive was added:

### Grain shape

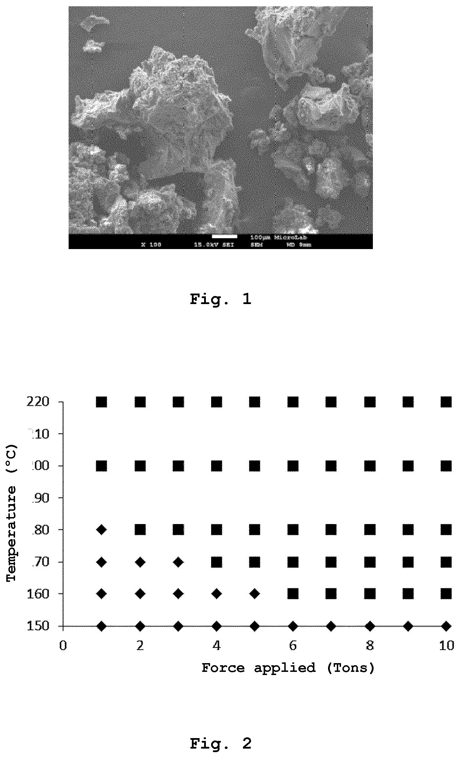

The granulate obtained has a rather undefined geometric form and maximum irregularity, guaranteeing greater specific surface, which will help in the subsequent process of agglomeration by increasing the number of contact points. Figure 1 presents a typical grain shape.

Dibutyl phthalate (DBP) absorption tests confirmed that the specific area of the material is significantly high. Values obtained were 0.22 to 0.27 m²/g for the granulate processed by the obtainment process described, whereas the material known in the state of the art, RF, shows values in the order of 0.228 m²/g. This fact enables greater contact area between the different grains.

### Presence of double bonds

Tests on the FTIR-ATR revealed that there is a significant quantity of double bonds, characteristic of monosubstituted alkenes or vinylic groups, indicating that the material has a reactive behavior.

Since no vulcanization additives were added, this behavior can only come from the granulate itself, thus showing a tendency to make subsequent chemical bonds.

### Glass Transition Temperature and Angle of Repose

The glass transition temperature, referred to as Tg, occurs at -61°C and its sloe angle is 33°. These stayed the same as those of the granulate referred to as RF and known in the State of the Art.

### Agglomeration conditions

Figure 2 represents the ranges of temperature and force to which the RFA granulate was subjected.

In order to agglomerate the granulate, it is advisable to operate at temperatures of at least 160°C, realizing that as of 180°C the cohesion is already good enough, so there is no justification for using temperatures higher than 200°C.

In short, the advisory temperature range for agglomeration is between 160 and 200°C. Moreover, it was noted that the pressure is also a rather significant variable, it being necessary to link the temperature and the force applied per unit of area. There is a proven proportionality between pressure and the temperature, for higher temperature values, the pressure applied could be less pronounced. In terms of the variable pressure, the advisory values in order to guarantee effective agglomeration should be comprised between 6 and 10 tons/dm².

It was possible to confirm that the mechanical properties of this material, such as tensile strength, elongation and hardness, present the best results in this range of operating conditions. Compared to the granulate referred to as RF, which did not undergo the same process, the RFA granulate presents substantially better mechanical properties.

**Table II - Results obtained through the different assays of hardness, maximum stress, tensile strength and elongation of the agglomerates prepared with the material processed according to the process presented (RFA) and according to the state of the art (RF).**

| | Hardness (Shore A) | Maximum stress (Mpa) | Tensile strength (Mpa) | Elongation (%) |
|---|---|---|---|---|
| Granulate RF | 34 | 0.4 | 0.4 | 16.6 |
| Granulate RFA | 35 | 1.2 | 1.2 | 49.9 |

### Agglomeration conditions in the presence of vulcanization additives

According to the embodiment in which vulcanization additives were used, it was possible to obtain superior characteristics for hardness, maximum stress, tensile strength and elongation. The vulcanization additives can be used separately or jointly.

With additions up to 12% of sulphur, 6% zinc oxide, 2% stearic acid and 2% vulcanization accelerators, considerable improvements in the mechanical properties are verified.

The vulcanization accelerators presenting the fastest reaction speed are as follows:
- zinc diethyldithiocarbamate, from the carbamate family;
- tetramethylthiuram disulfide, from the thiuram family;
- n-cyclohexyl benzothiazole sulfenamide, from the sulfenamide family.

It was ascertained that the best characteristics were found when adding sulphur in the range of 0.01% and 1.10%, zinc oxide in the range of 0.01% and 1.05%, stearic acid in the range of 0.01% and 1% and equally the amount of vulcanization accelerators is between 0.01% and 1%.

The following conditions were considered in determining the prior parameters:
- Work temperatures ranging between 160 - 220°C;
- Force applied of 10 tons/dm².

With the introduction of the vulcanization additives the hardness of the samples increases regardless of the thickness, without the agglomerates becoming brittle thanks to the beneficial effect of revulcanization.

**Table III - Results obtained through the different assays of hardness, maximum stress, tensile strength and elongation of the agglomerates prepared with the material processed with and without vulcanization additives.**

| | Hardness (Shore A) | Maximum stress (Mpa) | Tensile strength (Mpa) | Elongation (%) |
|---|---|---|---|---|
| Material with additives | 36 | 1.4 | 1.4 | 188.6 |
| Material without additives | 35 | 1.2 | 1.2 | 49.9 |

Naturally, the present technology is not restricted in any way to the embodiments described in this document and a person with knowledge in the field will be able to envisage many possibilities of modifying the technology without straying from the general idea, as defined in the claims.

All the embodiments described above are obviously mutually combinable. The accompanying claims additionally define preferred embodiments.

## Claims

1. A polymer material **characterized by** comprising an agglomeration of powders of vulcanized polymers having a particle size under 0.8 mm, wherein the powders of vulcanized polymers present a specific area comprised between 0.22 and 0.27 m²/g.

2. A process for obtaining the polymer material described in the preceding claim, **characterized by** comprising the following steps:
- collection of polymer granulates having a particle size greater than 0.8 mm;
- transformation of the polymer granulate having a particle size under 0.8 mm by way of friction between disks mounted on two shafts that turn in opposite directions and at different speeds, and the subsequent cooling of the granulate to a temperature of 40°C;
- agglomeration of the polymer granulate having a particle size under 0.8 mm by way of compression molding between 160 and 200°C and pressure between 6 and 10 tons/dm².

3. The process according to claim 2, **characterized in that** the working temperature in preparing the polymer granulate having a particle size under 0.8 mm is comprised between 60 and 90°C.

4. The process according to the preceding claim, **characterized in that** the the working temperature in preparing the polymer granulate having a particle size under 0.8 mm is comprised between 70 and 85°C.

5. A process of obtaining the polymer material according to any of claims 3 to 4, **characterized in that** the surface of the two contiguous disks comprises a spacing between 0.2 and 0.6 mm.

6. The process of obtaining the polymer material according to any of claims 2 to 5, **characterized in that** the relative rotation speed of the two contiguous disks is fixed at a ratio of 17.5:1.

7. The process according to any of claims 2 to 6, **characterized in that** the agglomeration step comprises vulcanization additives.

8. The process according to the preceding claim, **characterized in that** the vulcanization additives are vulcanization agents added in a percentage between 0.01 and 1.10%.

9. The process according to the preceding claim, **characterized in that** the vulcanization agents are selected from a list comprising zinc oxide and sulphur.

10. The process according to any of claims 2 to 7, **characterized in that** the vulcanization additives are vulcanization activators added in a percentage between 0.01 and 1%.

11. The process according to the preceding claim, **characterized in that** the vulcanization activator is stearic acid.

12. The process according to any of claims 2 to 7, **characterized in that** the vulcanization additives are vulcanization accelerators added in a percentage between 0.01 and 1%.

13. The process according to the preceding claim, **characterized in that** the vulcanization accelerators are selected from the following list: zinc diethyldithiocarbamate from the carbamate family, and/or tetramethylthiuram disulfide from the thiuram family, and/or n-cyclohexyl benzothiazole sulfenamide from the sulfenamide family.

14. The process according to any of claims 2 to 13, **characterized in that** the vulcanization additives are used separately or jointly.
